# EUROPEAN PATENT APPLICATION

(11) **EP 3 467 714 A1**
(43) Date of publication of application: **10.04.2019**
(21) Application number: 18195214.4
(22) Date of filing: 18.09.2018
(51) Int. Cl.: G06K 19/04, G06K 19/077, G06K 19/07

(54) **METHOD FOR MANUFACTURING A TRANSPONDER AND A TRANSPONDER**

(30) Priority: 06.10.2017 SE 1751237
(71) Applicant: Tagmaster AB, 164 46 Kista (SE)
(72) Inventor: ANDERSSON, Ronny, 146 32 TULLINGE (SE); ESKÅNG, Eric, 186 41 VALLENTUNA (SE); LINDBERG, Lars, 112 39 STOCKHOLM (SE)
(74) Representative: Noréns Patentbyrå AB

(57) **Abstract**

Transponder (100) comprising a rigid enclosure (110) and a circuit board (120), which circuit board (120) comprises an antenna (121) for emitting a wireless information signal, which enclosure (110) is arranged to completely enclose the circuit board (120) and a hollow compartment (117) arranged to be completely filled with a liquid potting material through at least one injection hole (111) in the enclosure (110), or a compartment (117) which is completely filled by a hardened potting material.

The invention is characterised in that the transponder (100) further comprises a piece of resilient material (160), which the enclosure (110) is arranged to completely enclose and which is pressed between an inside surface (113) of the enclosure (110) and a first surface (122) of said circuit board (120), preventing liquid potting material to enter a volume between the enclosure (110) and the circuit board (120) occupied by said resilient material (160).

The invention also relates to a manufacturing method as well as to an installation method.

## Description

The present invention relates to a method for manufacturing a transponder, in particular a transponder for emitting an electromagnetic information signal, such as a radio signal, to a respective sender. For instance, the transponder may be a rail tag arranged to emit an identifying signal to, or to receive an identifying signal from, a passing train, such as for determination of a position for said train. The invention also relates to such a transponder, as well as a to a method for installing such a transponder.

Electromagnetic radiation is frequently used for determining positions and velocities of objects. In a typical setup, a transponder, such as an RFID (Radio Frequency Identification) transponder, is fixedly mounted along an expected trajectory path of said object, in turn carrying a receiver arranged to receive and decode a wireless electromagnetic information signal emitted by said transponder. By detecting and analysing the information signal, the receiver identifies the object and may determine where the object is located in relation to the transponder.

Typical fields of use include rail traffic, where such transponders ("tags" or "RFID tags") are located along the rails, each sending a unique identity code for passing trains to detect. Conventionally, RFID technology may be used for the electromagnetic communication, and the tag may be an active or passive RFID transponder, such as activated by the receiver on the passing train.

Such tags have very high requirements in terms not only of signal accuracy and reliability, but at the same time of durability, weather resistance and longevity.

In many applications, such tags are designed as battery-powered, sealed units for mounting along said rails. They may be programmable, and hence provide an electric communication interface arranged to convey digital information to the tag, such as regarding the electronic identity to be emitted in said RFID operation.

There are a number of problems with conventional such tags.

Firstly, there is a problem of providing a selected controlled electromagnetic environment of the emitting circuitry and antenna while at the same time achieving a sufficiently weather-resistant encapsulation of the electronics.

Secondly, there is a problem of providing said encapsulation in a consistent manner during manufacture, without resulting in too much variation in RF characteristics.

Thirdly, there is a need to provide a transponder which can be easily and reliably programmed without jeopardizing the integrity of the transponder encapsulation.

Fourthly, there is a need to provide a cost efficient, yet reliable and repeatable manufacturing method of such a transponder.

All these advantages should be achieved while providing a tag which is easy to install, requires low maintenance and has a long useful life, and which is durable under extreme and shifting environmental conditions.

The present invention solves the above described problems.

Hence, the invention relates to a transponder comprising a rigid enclosure and a circuit board, which circuit board comprises an antenna for emitting a wireless information signal, which enclosure is arranged to completely enclose the circuit board and a hollow compartment arranged to be completely filled with a liquid potting material through at least one injection hole in the enclosure, or a compartment which is completely filled by a hardened potting material, which transponder is characterised in that the transponder further comprises a piece of resilient material, which the enclosure is arranged to completely enclose and which is arranged between an inside surface of the enclosure and a first surface of said circuit board, preventing liquid potting material to enter a volume between the enclosure and the circuit board occupied by said resilient material.

Furthermore, the invention relates to a method for manufacturing such a transponder, which method is characterised in that the method comprises the following ordered steps:
a) inserting a resilient material and a circuit board into an enclosure, so that the circuit board compresses the resilient material between an inside of the enclosure and the circuit board;
b) sealing the enclosure; and c) filling a hollow compartment in the enclosure with liquid potting material through an injection hole in the enclosure, and in that the extension of a body of said liquid potting material inside said enclosure is determined by the shape of the resilient material so that a selected controlled electromagnetic environment is achieved for said circuit board.

Moreover, the invention relates to a method for installing such a transponder, which method is characterised in that method comprises the following ordered steps: a) inserting a programming interface tool into an opening in the back side of the enclosure, so that the programming interface tool comes into contact with a programming interface contact on a circuit board of the transponder; b) programming the transponder using said programming interface tool; c) removing the programming interface tool from the said opening; d) permanently sealing the said opening; e) mounting the transponder, with the back side facing a mounting surface, in an operating orientation.

In the following, the invention will be described in detail, with reference to exemplifying embodiments of the invention and to the enclosed drawings, wherein:
Figure 1 is a top perspective view of a transponder according to an exemplifying embodiment of the invention;
Figure 2 is the same as Figure 1, but with a first transponder lid part removed;
Figure 3 is the same as Figure 2, but with a foam part removed;

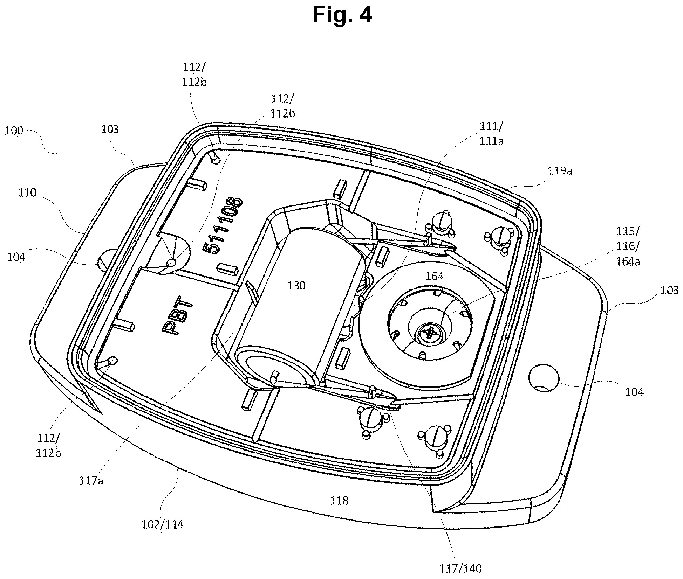

Figure 4 is the same as Figure 3, but with a circuit board part removed;

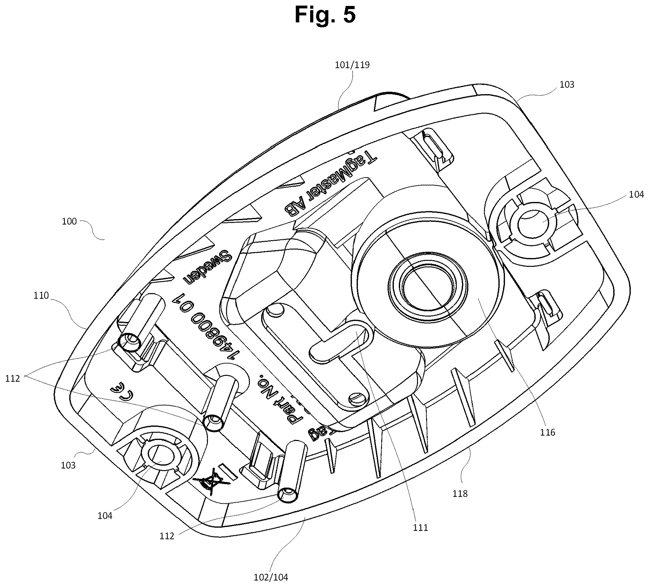

Figure 5 is a bottom perspective view of the transponder illustrated in Figure 1;

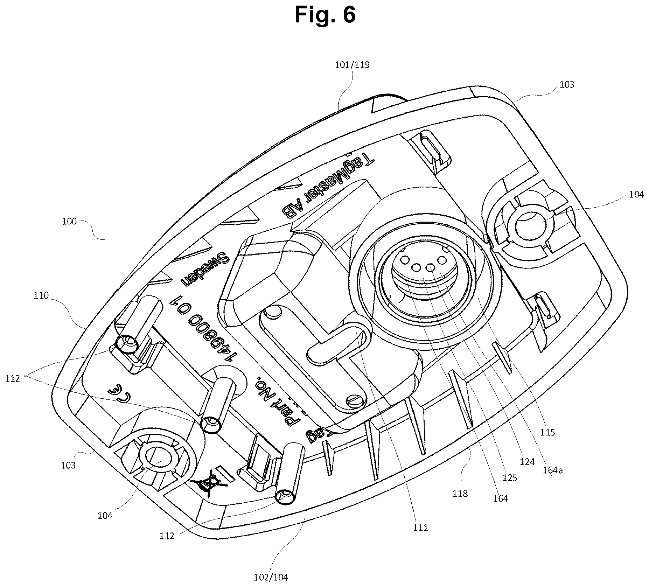

Figure 6 is the same as Figure 5, but with a sealing plug not assembled;

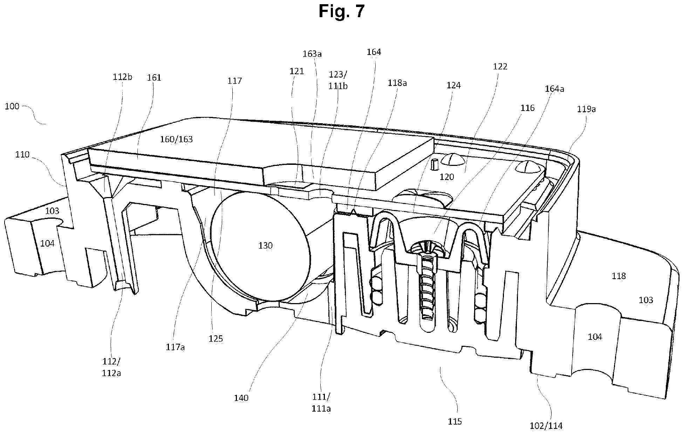

Figure 7 is a cross-sectional view of the transponder shown in Figure 2, along a first section;

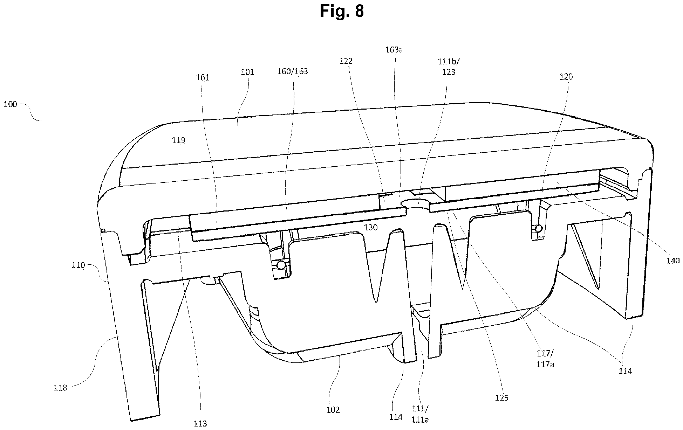

Figure 8 is a cross-sectional view of the transponder shown in Figure 1, along a second section;
Figure 9 is a flow-chart illustrating a method for manufacturing a transponder of the type illustrated in Figures 1-8; and
Figure 10 is a flow-chart illustrating a method for installing a transponder of the type illustrated in Figures 1-8.

All Figures show the same exemplifying embodiment of the present invention, and share the same reference numerals.

It is noted that the Figures, for reasons of clarity, do not disclose the potting material.

Hence, the present invention relates to a transponder 100. The transponder is a wireless transponder for wirelessly communicating using electromagnetically conveyed information signals. The transponder 100 is preferably specifically configured and adapted for being mounted in demanding environments, such as outdoors and/or as a part of railway installations, manufacturing facilities and so forth, where there are harsh physical environmental conditions and consequently high requirements for environmental shielding of the transponder 100. Further preferably, the transponder is preferably a standalone component, without any electric connections to external components, and is preferably completely sealed and watertight. In particular, it is preferred that it is electrically operated and battery 130 powered, with a required useful life of at least 10 years without any battery 130 replacement.

The transponder 100 has a front side 101, arranged to be visible when the transponder 100 is mounted on a mounting surface, and a back side 102, arranged to face said mounting surface in such mounted state of the transponder 100. The transponder 100 is arranged to emit its identification signal at least out from its front side 101.

The transponder 100 is further arranged with mounting means 104, such as through holes in respective side flanges 103, which through holes are arranged to receive mounting screws.

The transponder 100 comprises a rigid enclosure 110. The enclosure 110 is preferably arranged to completely enclose all other components of the transponder 100, possibly with the exception of any transponder 100 mounting means, such as said mounting screws. The enclosure 110 preferably forms a completely sealed and watertight interior space 140, in which the below-described components are all arranged and hence protected from the external environment of the transponder 100 when assembled, configured and mounted. Hence, it is preferred that the enclosure 110 does not comprise any through holes for electric connections.

The battery 130 is preferably completely enclosed by the enclosure 110, arranged in said hollow space 117. It is then preferred that the enclosure 110 is constructed in such a way so that, once the enclosure 110 is assembled and the transponder 100 is mounted, battery 130 replacement is not possibly without physically breaking at least part of the enclosure 110 in a way requiring replacement of at least one part of the enclosure 110. As will be described hereinbelow, the battery 130 is preferably encapsulated by potting material in an assembled and mounted state, making it practically impossible to replace the battery 130 without terminally damaging the transponder 100.

The transponder 100 is preferably of a type which wirelessly emits, or is arranged to wirelessly emit, a digitally coded identification signal of the transponder 100. Preferably, the transponder is an RFID transponder. Preferably, the transponder 100 is arranged to periodically emit said identification signal and/or to emit said identification signal in response to an activation signal received wirelessly by the transponder 100.

Herein, to "emit" a wireless signal is intended to mean a passive and/or an active emission.

In general, there are different types of wireless tags, and in particular of RFID tags. An active tag comprises a radio circuit, that can both receive and actively transmit a wireless signal. A passive tag comprises circuitry that uses the electromagnetic energy in a received wireless signal to power a circuit, such as an ASIC, which is arranged to emit a modulated signal ("backscatter") as a result thereof. A semi-passive tag only emits a modulated wireless signal as a reaction to a received wireless signal, but using an actively powered (such as using a battery) circuit, such as an ASIC. Hence, the emission may be an active transmission (in the case of an active or semi-active tag) or a passive emission (in the case of a passive tag). The present invention may be used with active, passive or semi-passive tags, but it is preferred to use a passive or, most preferably, semi-passive, RFID tag.

Then, the transponder 100 may for instance be mounted at a desired and well-defined mounting location along a railway track, so that a corresponding transponder, antenna and/or wireless receiver mounted on a passing train wirelessly can read the identification signal, and from this both determine the identification of the transponder 100 and the location of the train at the time of the reading of the identification signal.

In order to be able to achieve a long useful life under such conditions and without battery 130 replacement, it is important that the battery 130 has enough stored energy. The battery 130 may be a lithium ion battery.

The enclosure 110 is preferably made from thermoplastic, such as a PC-PBT (polycarbonate - polybutylene terephthalate) plastic or a POM (polyoxymethylene) plastic, or any other suitable rigid thermoplastic, or a combination thereof.

Furthermore, the transponder 100 comprises a circuit board 120 and the said battery 130, which is arranged to power the circuit board 120 and therefore connected thereto using suitable wiring.

The circuit board 120 is preferably a rigid circuit board, but may also be of flexiboard type.

The circuit board 120 in turn comprises an antenna 121 for emitting the digitally coded information signal mentioned above, and possibly also for receiving wireless signals as described. The antenna 121 may be a patch antenna, as opposed to a dipole antenna. In particular, the antenna 121 is preferably a flat antenna, laid out flat on a flat, planar part of the circuit board 120. Preferably, the circuit board 120 is substantially planar, and is preferably maximally 5 mm thick. The antenna 121 is preferably arranged with an antenna lobe, preferably a connected antenna lobe, extending (in angular direction) across the majority of the hemisphere facing out from the antenna 121 side of the circuit board 120, which is preferably the side facing in the transponder 100 front side 101 direction. Preferably, the total distance between the front side 101 external face and the side of the circuit board 120 facing away from the front side 101 (that is, the side of the circuit board 120 preferably comprising the said ground plane) is maximally 10 mm.

According to the present invention, the enclosure 110 is arranged to completely enclose the circuit board 120, the battery 130 and also a hollow compartment 117. Hence, the said interior space 140 contains the circuit board 120, the battery 130 and also the hollow compartment 117. Preferably, at least part of the circuit board 120 and the battery 130, preferably the entire circuit board 120 and the entire battery 130, are arranged in said hollow compartment 117.

Further according to the present invention, the hollow compartment 117 is arranged to be completely filled with a liquid potting material through at least one, preferably exactly one, injection hole 111 in the enclosure. During such filling, the hollow compartment 117 is hence completely filled with such potting material, so that the circuit board 120 and the battery 130 are also preferably at least partly encapsulated by the said potting material.

The present invention also envisages covering the case in which the hollow compartment 117 of the transponder 100 has already been filled with liquid potting material, which potting material has then been allowed to cure, forming a solid filling of the hollow compartment 117.

The potting material may be any suitable potting material for potting of electronic equipment, such as an epoxy resin. In particular, it is preferred that the potting material is of a type which, when installed close to the antenna, affects the dielectric environment of the antenna in a way which substantially affects the antenna properties of any antenna the lobe of which would be arranged to cross the potting material body in question, when the potting material is fully cured. In particular, the potting material used should, in terms of its properties as a material, have a considerably stronger effect on the antenna properties as compared to air or the below described resilient material, when observed as a material.

Namely, further according to the invention, the transponder 100 further comprises a piece of resilient material 160, which the enclosure 110 is arranged to also completely enclose. The resilient material 160 is arranged to be placed, preferably pressed together, in an assembled state of the transponder 100, or indeed pressed in such assembled state, between an inside surface 113 of the enclosure 110 and a first surface 122 of said circuit board 120, preventing said liquid potting material to enter into a volume 161 between the enclosure 110 and the circuit board 120 occupied by said resilient material 160. The inside surface 113 is preferably arranged at the said front side 101 of the transponder 100, and the first surface 122 is preferably arranged facing towards the front side 101 in said assembled state of the transponder 100.

The resilient material 160 is preferably made from a foam, preferably with open pores. Its relative permittivity is preferably low, such as close to 1, preferably between 1.0 and 2.0, more preferably between 1.0 and 1.5, at the used frequencies. Preferably, the relative permittivity of the resilient material 160 is sufficiently low so as not to substantially affect the characteristics of the antenna 121 in antenna directions occupied by the resilient material 160. However, it is also possible, albeit not preferred, that the resilient material 160 has a larger permittivity but is then arranged as a functional part of the total antenna structure, whereas the design of the resilient material 160 in combination with the antenna 121 design is selected to yield a selected antenna characteristic of the transponder 100 as a whole.

Preferably, the resilient material 160 has a low dissipation factor, which is preferably close to 0, preferably between 0.00 and 0.10, at the used frequencies.

The elastic modulus of the resilient material is preferably between 0.1 and 0.2, and preferably displays a substantially linear elasticity, substantially without showing any permanent shape changes after temporary compressions.

Suitable materials include rubber, silicone and EVA foams.

In order to achieve the said compression of the resilient material 160, it is preferred that the resilient material 160, across the whole material 160 body, has a material height which is at least 10% larger than a corresponding height between said enclosure 110 inside surface 113 and said circuit board 120 first surface 122, between which surfaces 113, 122 the resilient material 160 is arranged to be compressed in said assembled and mounted state, forcing the resilient material 160 to be compressed at least 10% across the whole material 160 body as a result thereof.

Preferably, the resilient material 160 then forms the said volume 161, substantially extending across the entire antenna 121 surface, preferably with a certain margin along the antenna 121 sides of at least 5% of the total antenna 121 surface, as viewed perpendicularly to a main antenna 121 surface from the front side 101 of the transponder 100.

As a result of such a construction, the volume 161 occupied by the resilient material 160 then forms an electromagnetically non-shielding angular area across which the antenna 121 is enabled to function with high efficiency for receiving wireless signals from external device, and for communicating said wireless identifying signal. At the same time, a robust and protected constructed is achieved.

In particular, the resilient material 160 is arranged to prevent potting material to enter into this defined volume 161 so as to achieve such antenna properties of the transponder 100.

Such a transponder 100 construction is fail-safe and easy to manufacture and install, which will be described in further detail below. It also allows for the use of relatively large batteries and long useful lives under harsh conditions, without running into moisture problems.
In particular, it is preferred that a shape of said resilient material 160 is selected so as to achieve a desired controlled dielectric environment of the antenna 161. Such controlled environment may preferably take into consideration the existence of the potting material in the hollow compartment 117 not occupied by any components and the resilient material 160.

According to a preferred embodiment, the inside surface 113 of the enclosure 110 against which the resilient material 160 is pressed constitutes an inside of the front side 101 of the transponder 100 when installed for use in an operating orientation, and in particular in said assembled state.

This operating orientation also occurs in the above-mentioned mounted state, in which the transponder 100 is mounted on a substrate surface, with the back side 102 facing the substrate surface. The transponder 100 may be mounted with the front side 101 upwards, downwards or sideways, providing antenna direction specificity in the corresponding directions.

According to a preferred embodiment, the said injection hole 111 is arranged to deliver, or has delivered (as the case may be), the potting material between the said inside surface 113 of the enclosure 110 and the circuit board 120, at one or several injection locations each located in the hollow compartment 117 where the resilient material 160 is not present. It is of course understood that the hollow compartment 117, when filled with potting material, will no longer be hollow.

According to a particularly preferred embodiment, the injection hole 111 passes through a through hole 123 in the circuit board 120. In particular, the injection hole 111 preferably runs from a location on the enclosure 110 on an opposite side 114 of the enclosure 110 (as compared to the front side 101 of the transponder 100), up to the circuit board 120, through the said through hole 123 and finally up to an orifice 111b located between said inside surface 113 and said first surface 122. The opposite side 114 is hence located on the other side of the circuit board 120 as seen from the said inside surface 113. Preferably, the orifice 111b is arranged in a volume not occupied by the resilient material 160 in the assembled and mounted state of the transponder 100. As illustrated in the Figures, the resilient material comprises a cut-out 163a defining such a non-occupied volume. When mounted in position in the enclosure 110, the cut-out 163a is then arranged to communicate, via said hollow compartment 117, with a battery compartment 117a (see below) any air evacuation holes 112 (see below), allowing potting material to enter via the orifice 111b, enter said non-occupied volume, completely fill the hollow compartment 117 and exit via such air injection hole(s) (112).

The potting injection hole 111 may be formed by a suitable elongated channel 111a in the enclosure 110 material, which is also preferably the case for any air evacuation holes 112 used.

Namely, the enclosure 110 preferably also comprises at least one air evacuation hole 112, arranged through said opposite side 114 of said enclosure 110. Such air evacuation holes 112 are connected to the injection hole 111 orifice 111b via said hollow compartment 117, and serve the purpose of evacuating air as the potting material enters the hollow compartment 117. Preferably, the or each air evacuation hole(s) 112 comprise(s) a respective elongated channel 112a with a respective end orifice 112b.

According to a preferred embodiment, at least one end orifice 112b comprises an expanded end part, serving both the purpose of visual filling indicator and potting settling volume during filling of potting material.

It is particularly preferred that the at least one air evacuation hole 112 and the said injection hole 111 all terminate at the said opposite side 114, which then is formed on said back side 102 of the transponder 100. This way, the potting can be performed completely from the back side 102, which is thereafter mounted face inwards, towards the mounting surface, in said mounted state. As a result, the holes 111, 112 are protected from environmental factors, as well as tampering, when the transponder 100 is in the said mounted state. Preferably, no injection 111 or air evacuation 112 holes are visible on the transponder 100 when in said mounted state, but are hidden by the mounting surface. There are preferably at least two air evacuation holes 112, more preferably at least three air evacuation holes 112, more preferably, as illustrated in the Figures, at least six air evacuation holes 112. However, there may also be only one air evacuation hole 112.

According to a preferred embodiment, the resilient material 160 further comprises or defines a hollow volume 164a, such as a through hole through the resilient material 160, arranged not to allow liquid potting material to enter said hollow volume 164a. Such hollow volume 164a is preferably arranged at a circuit board 120 surface, allowing physical access to the circuit board 120 even after potting of the transponder 100. It is preferred that the resilient material 160 is arranged to completely fill out any non-potted hollow parts of the enclosure 110, with the only exception of physical access points to the circuit board 120.

In the exemplifying embodiment illustrated in the Figures, the resilient material 160 comprises two separate parts; a first part 163 and a second part 164. In this preferred case, the first part 163 is arranged to be compressed between the said inside surface 113 of the enclosure 110 and said first surface 122 of the circuit board 120, while the second part 164 is arranged to be compressed, in the corresponding manner, between an opposite, second surface 125 of the circuit board 120 and a corresponding part of the enclosure 110. Preferably, the second surface 125 is arranged to face towards the back side 102 of the transponder 100, and the corresponding part of the enclosure 110 is preferably part of a base part 118 of the enclosure 110 (see below).

The properties of the first part 163 may preferably be as described above in relation to the resilient material 160 in general. The second part 164 may have similar or identical properties. However, it is preferred that the second part 164 is more elastic than the first part 163, preferably featuring a foam material with closed pores.

The compression of each resilient material 160 part 163, 164 in the assembled state is preferably at least 10%, more preferably at least 25%.

In particular, it is preferred that the circuit board 120 comprises an electric programming interface contact 124, arranged to be reachable through a corresponding opening in the enclosure 110. Then, it is preferred that the said interface contact 124 is arranged within said hollow volume 164a so that it is accessible therethrough for a programming hardware connection tool. As illustrated in the Figures, it is preferred that the hollow volume 164a is defined on the second surface 125 of the circuit board 120, arranged to face away from the front side 101 and towards the back side 102 of the transponder in said assembled state, so that the programming interface contact 124 is not visible nor accessible when the transponder is in said mounted state.

Preferably, the enclosure 110 comprises a programming through hole 115, preferably arranged through said base part 118 of the enclosure 110 and accessible from said back side 102 of the transponder 100, through which the said hardware programming tool may be inserted so as to reach said programming interface contact 124 during installation of the transponder 100.

The programming interface contact 124 may for instance comprise a series of electric connections arranged to match those of said hardware tool.

The programming hole 115, which is hence sealed from the hollow compartment 117 in which the potting material is provided by the second resilient material 160 part 164, is arranged to be permanently sealed to the exterior of the enclosure 110 using a permanent sealing plug 116, which is inserted into the through hole 115, and arranged to seal the through hole 115 in a permanent and liquid-tight manner. Preferably, after insertion into the through hole 115, the sealing plug 116 cannot be removed without terminally damaging the sealing plug 166 and/or the enclosure 110.

For ease of manufacturing and high operating reliability, the resilient material 160 is preferably in the form of a flat piece of material, associated with a two-dimensional shape. Then, the resilient material 160 may be manufactured by cutting it out in the said two-dimensional shape from a connected, larger piece of flat material. The two-dimensional shape then defines any hollow volumes 164a and/or non-potted volumes as described above and illustrated in the Figures.

The resilient material 160 is illustrated in the Figures, and described above as two separate parts 163, 164, where only the second part 164 is arranged to define a hollow volume 164a but where both the first 163 and second 164 part define non-potted volumes (occupied by the respective resilient material 160 after potting). However, it is realized that the resilient material 160 may comprise only one part, or more than two parts, and that any one of such parts may be arranged to define respective hollow volumes 164a on either side of a corresponding circuit board enclosed by the enclosure 110, as the case may be. However, each resilient material part defines, by its own volume, a non-potted part as described above.

As illustrated in the Figures, the battery 130 is preferably arranged in a hollow battery compartment 117a, arranged on the second side 125 of the circuit board 120, facing away from the front side 101 in the assembled and mounted state of the transponder 100.

As mentioned above, the enclosure 110 preferably comprises a base part 118 and a lid 119. The lid 119 is preferably arranged to cover the circuit board 120 in said assembled and mounted state, and to define the internal space between said inside surface 113 and said first surface 122 as described above. The base part 118 and said lid 119 are preferably arranged to be joined together in a permanent manner, such as using ultrasound welding, to form the enclosure 110 in said assembled state.

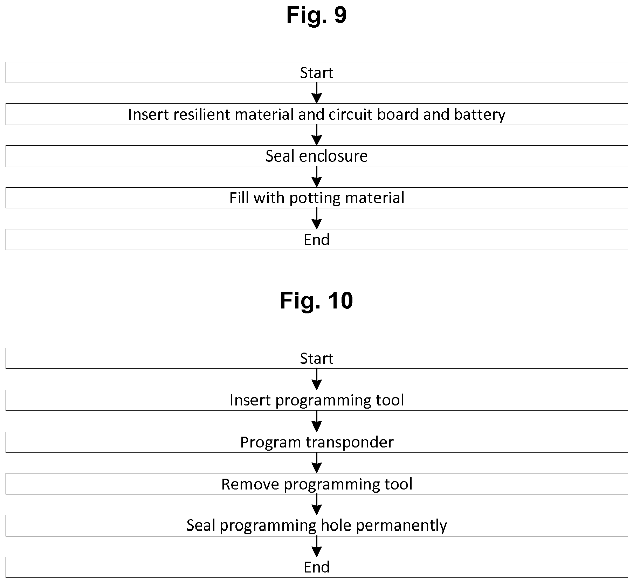

Figure 9 illustrates a method for manufacturing a transponder 100 of the above described type.

In a first step, the method is initiated.

In a subsequent step, the resilient material 160 is inserted, together with the circuit board 120, into the enclosure in a way so that the circuit board 120 compresses the resilient material 160 between the inside 113 of the enclosure 110 and the first surface 122 of the circuit board 120 as described above.

In the particular example illustrated in the Figures, the circuit board 120 is preferably first inserted into the base part 118, after which the first part 163 of the resilient material 160 is placed on top of the circuit board 120. Then, the lid 119 is put on top of the said first part 163, effecting the compression of the first part 163 resilient material 160 between the lid 119 and the circuit board 120.

Preferably, the lid 119 comprises distance means 119a, defining a predetermined distance between the inside surface 113 and the first surface 122. It is understood that such distance means 119a may also be arranged as a part of the base part 118, of the circuit board 120 or in any other suitable way.

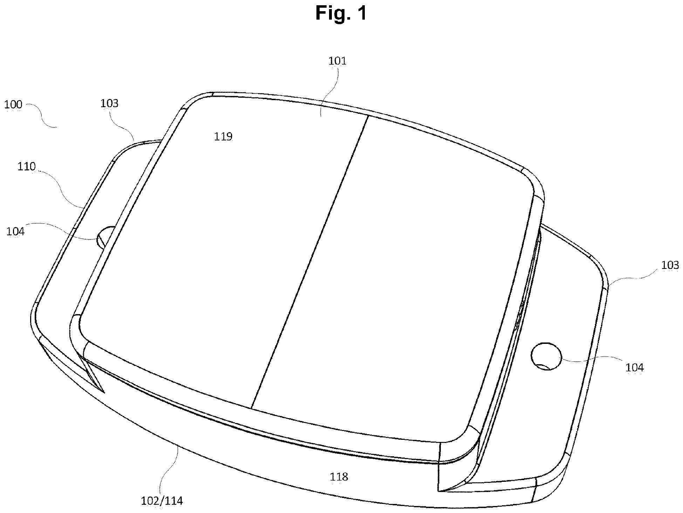

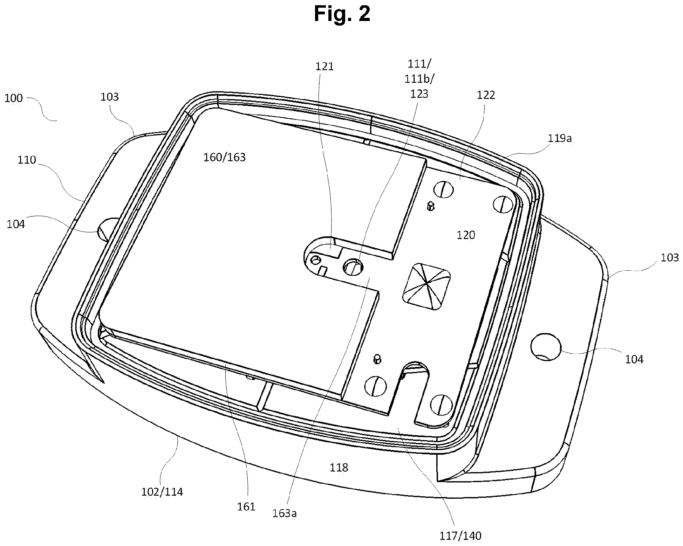

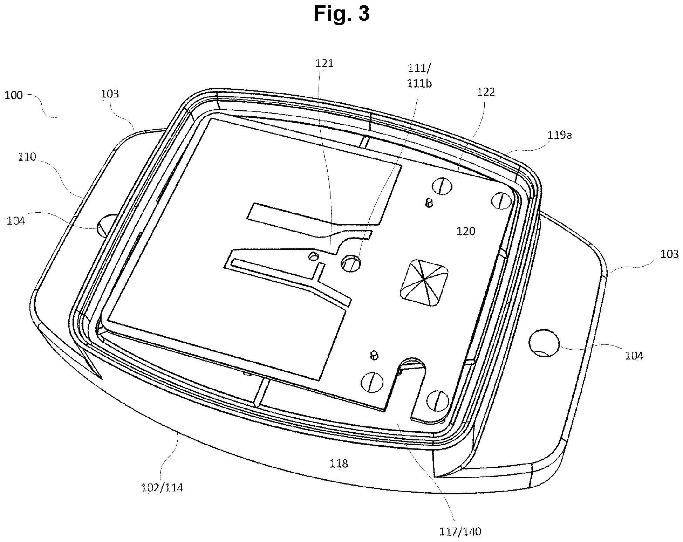

Figure 3 illustrates the state of the transponder 100 after the insertion of the circuit board 120; Figure 2 illustrates the state after the insertion of the resilient material 160 first part 163; and Figure 1 illustrates the state after the assembly of the lid 119.

In a subsequent step, the enclosure 110 is sealed, preferably permanently, as described above.

Before this sealing step, the battery 130 is also provided and put into its assembled position. For instance, the battery 130 may be rigidly connected to the circuit board 120 in a way so that it is put into the correct position as a consequence of the circuit board 120 being inserted into the base part 118.

Furthermore, the second part 164 of the resilient material 160 is positioned before the insertion of the circuit board 120.

It is realized that the "stacked" style arrangement of the components 119, 160, 120, 118, arranged on top of each other in a sandwich arrangement, provides a simple yet fail-proof construction and manufacture. However, the same arrangement may be achieved if beginning by arranging the first part 163 of the resilient material 160 inside the lid 119 and then progressing by positioning the circuit board 120 on top of the first part 163, ending with the positioning of the base part 118.

All of the components, and in particular components 160, 120, may be placed using corresponding alignment means, such as cooperating alignment means on the base 118 and the circuit board 120. Furthermore, the resilient material 160 may be aligned in its predetermined position in the enclosure 110 by the use of resilient material alignment means. Preferably, the first part 163 and/or the second part 164 may be aligned using cooperating alignment means on the part 163, 164 in question and the circuit board 120. Further preferably, the first part 163 and/or the second part 164 may be fastened to the circuit board using an adhesive surface provided on the first part 163 and/or the second part 164 and/or on the circuit board 120. In particular, the resilient material 160 may comprise an adhesive surface arranged to adhere to the said circuit board 120, possibly being aligned using alignment means of the said type. The Figures illustrate exemplifying such alignment means.

Furthermore, the circuit board 120 may preferably be aligned in its predetermined position in the enclosure 110 by the use of circuit board alignment means of said type.

It is noted that the second resilient material 160 part 164 is also compressed when the circuit board 120 is pressed against the base 118, preferably under the control of second part distance means 118a that are preferably formed as integral parts of the base 118 and define the compressed second part 164 height.

After the enclosure 110 has been sealed, the circuit board 120 and the battery 130 are hence completely encapsulated by the enclosure 110, apart from the air evacuation through holes 112, the injection hole 111 and the programming hole 115 via which the circuit board 120 can be reached from the outside. However, the hollow compartment, which will be completely filled with liquid potting material, is completely closed, even at the programming hole 115, using the second resilient material 160 part 164 as a seal, as has been described above.

In a subsequent step, the hollow compartment 117 in the enclosure 110 is completely filled with liquid potting material, through the injection hole 111 in the enclosure 110. This injection is preferably performed until the liquid potting material appears in each of said at least one air evacuation through holes 112 in the enclosure 110, as described above.

Preferably, the hollow compartment 117, when the enclosure 110 has been assembled as described above, forms a respective connected channel between the injection hole 111 and the said one or several air evacuation holes 112, without any dead ends along said connected channel.

Irrespectively of this, in order to make sure that the potting material completely fills the hollow compartment 117 without leaving any air pockets, it is preferred that the filling takes place in several stages. In a first stage, liquid potting material is introduced via the injection hole 111 using potting material overpressure and/or vacuum applied to the air evacuation hole(s) 112. Thereafter, when the liquid potting material has partly been introduced into the enclosure 110 via the injection hole 111, the liquid potting material is allowed to settle gravimetrically during a certain time period, with the lid 119 of the enclosure 110 oriented downwards, so as to completely fill all voids of the hollow compartment 117. During this time period, any overpressure and/or vacuum may be temporarily inactivated. Finally, overpressure and/or vacuum may again be applied to complete the filling process.

In particular, during the potting process, the extension of a body of said liquid potting material inside enclosure 110 is at least partly determined, as has been explained above, by the shape of the resilient material 160, so that a selected controlled electromagnetic environment of the above-described type is achieved for circuit board 120, and in particular for the antenna 121.

Even after the potting process, when the hollow compartment 117 is completely filled with liquid potting material, the programming interface contact 124 is still available for physical contact via the programming hole 115.

Then, the liquid potting material is allowed to cure completely, forming a protecting material layer around the transponder 100 circuitry and battery 130. Thereupon, or possibly after a subsequent programming and permanent sealing plug 116 installation step, the transponder 100 is in said assembled state.

Figure 10 illustrates a method for installing a transponder of the above-described type.

This method, which may be performed after the manufacturing method steps described above, and preferably at least partly in direct connection thereto, starts in a first step.

In a subsequent step, the above-described hardware programming interface tool is inserted into the programming hole 115, which hole 115 forms an opening in the back side 102 of the transponder 100 enclosure 110, so that the said programming interface tool comes into direct physical contact with the programming interface contact 124 on the circuit board 120 of the transponder 100.

In a subsequent step, the transponder 100 is digitally and logically programmed, in an electrical manner, using the programming interface tool. Such programming preferably at least comprises the allotting of a digitally stored, unique identification code to the transponder 100, which identification code is thereafter emitted as, or a part of, the above-described identification signal.

In a subsequent step, the programming interface tool is removed from the hole or opening 115.

In a subsequent step, the programming hole 115 is permanently sealed, such as using the above-described sealing plug 116. This means that programming may preferably only be performed once for the transponder 100.

By the finalization of this step, the transponder 100 is in an assembled and configured state, and is ready for mounting in a desired location.

The circuit board 120 is preferably arranged to start its antenna operation as a result of it being connected to the battery 130, and hence as an integrated part of the above manufacturing process.

In a subsequent step, which may be performed at a later point in time, the transponder 100 is mounted, with its back side 102 facing a mounting surface, in an operating orientation. Thereafter, transponder is in its assembled, configured and mounted state.

In order to operate in cooperation with corresponding receiving antennae/readers, information associated with the transponder, at least comprising said unique identity code and preferably also comprising information regarding the well-defined mounting position of the transponder 100, is registered in a central system for reference.

Above, preferred embodiments have been described. However, it is apparent to the skilled person that many modifications can be made to the disclosed embodiments without departing from the basic idea of the invention.

For instance, the programming hole 115 may be arranged on the front side 101 of the transponder, so that the second part 164 of the resilient material 160 may be formed on the same side of the circuit board 120 as the first part 163, or even so that the first 163 and second 164 parts form one single connected or even integrated piece of resilient material 160. The programming interface contact 124 may then be reachable through the lid 119 or from the side of the enclosure.

The battery 130 may be arranged beside the circuit board 120, as opposed to beneath the circuit board 120 as illustrated in the Figures.

The potting material filling operation may be performed with the transponder 100 arranged in other orientations than what has been described above. This may then imply different positioning of the injection 112 and air evacuation 111 holes, etc.

The transponder 100 may comprise additional components, in addition to the ones described above, such as additional circuit boards.

These are merely a few examples of possible ways of varying the transponder according to the present invention within the protective scope defined by the claims, applying the principles described and exemplified above.

In general, everything which has been described herein in connection to the transponder 100 as such is freely applicable to the manufacturing and installation methods described herein, and vice versa.

Hence, the invention is not limited to the described embodiments, but can be varied within the scope of the enclosed claims.

## Claims

1. Transponder (100) comprising a rigid enclosure (110) and a circuit board (120), which circuit board (120) comprises an antenna (121) for emitting a wireless information signal, which enclosure (110) is arranged to completely enclose the circuit board (120) and a hollow compartment (117) arranged to be completely filled with a liquid potting material through at least one injection hole (111) in the enclosure (110), or a compartment (117) which is completely filled by a hardened potting material, **characterised in that** the transponder (100) further comprises a piece of resilient material (160), which the enclosure (110) is arranged to completely enclose and which is arranged between an inside surface (113) of the enclosure (110) and a first surface (122) of said circuit board (120), preventing liquid potting material to enter a volume between the enclosure (110) and the circuit board (120) occupied by said resilient material (160).

2. Transponder (100) according to claim 1, **characterised in that** the transponder (100) further comprises a battery (130) for powering the circuit board (120), and **in that** the enclosure (110) is arranged to completely enclose the battery (130).

3. Transponder (100) according to claim 1 or 2, **characterised in that** the piece of resilient material (160) I pressed between said inside surface (113) of the enclosure (110) and said first surface (122) of the circuit board (120).

4. Transponder (100) according to any one of the preceding claims, **characterised in**that the inside surface (113) of the enclosure (110) against which the resilient material (160) is pressed constitutes an inside of a front side (101) of the transponder (100) when mounted for use in an operating orientation.

5. Transponder (100) according to any one of the preceding claims, **characterised in that** the injection hole (111) is arranged to deliver, or has delivered, the potting material between the said inside surface (113) of the enclosure (110) and the circuit board (120).

6. Transponder (100) according to claim 5, **characterised in that** the injection hole (111) passes through a through hole (123) in the circuit board (120).

7. Transponder (100) according to any one of the preceding claims, **characterised in that** the enclosure (110) comprises at least one air evacuation hole (112), arranged through an opposite side (114) of said enclosure (110) located on the other side of the circuit board (120) as seen from the said inside surface (113) of the enclosure (110).

8. Transponder (100) according to claim 7, **characterised in that** the at least one air evacuation hole (112) comprises an elongated channel (with an end orifice.

9. Transponder (100) according to claim 7 or 8, **characterised in that** the at least one air evacuation hole (112) and the said injection hole (111) all terminate at the said opposite side (114).

10. Transponder (100) according to any one of the preceding claims, **characterised in that** a shape of said resilient material (160) is selected so as to achieve a desired controlled dielectric environment of the antenna (121).

11. Transponder (100) according to any one of the preceding claims, **characterised in that** the resilient material (160) comprises or defines a volume (161), arranged not to allow liquid potting material to enter said volume (161), **in that** the circuit board (120) comprises an electric programming interface contact (124) reachable through a corresponding opening (115) in the enclosure (110), and **in that** the said interface contact (124) is arranged within said volume (161).

12. Transponder (100) according to any one of the preceding claims, **characterised in that** the enclosure (110) does not comprise any through holes in a surface which is a front surface when the transponder (100) is mounted for use in an operating orientation.

13. Transponder (100) according to any one of the preceding claims, **characterised in that** the potting material is a material substantially affecting the electromagnetic environment of an antenna the lobe of which is arranged to cross through such material.

14. Method for manufacturing a transponder (100) according to any one of the preceding claims, **characterised in that** the method comprises the following ordered steps:
a) inserting a resilient material (160) and a circuit board (120) into an enclosure (110), so that the circuit board (120) compresses the resilient material (160) between an inside of the enclosure (110) and the circuit board (120);
b) sealing the enclosure (110); and
c) filling a hollow compartment (117) in the enclosure (110) with liquid potting material through an injection hole (111) in the enclosure (110),
and **in that** the extension of a body of said liquid potting material inside said enclosure (110) is determined by the shape of the resilient material (160) so that a selected controlled electromagnetic environment is achieved for said circuit board (120).

15. Method according to claim 14, **characterised in that**, in step a), the resilient material (160) is aligned in a predetermined position in said enclosure (110) by the use of resilient material (160) alignment means.

16. Method according to claim 14 or 15, **characterised in that**, in step a), the circuit board (120) is aligned in a predetermined position in said enclosure (110) by the use of circuit board (120) alignment means.

17. Method according to any one of claims 14-16, **characterised in that** the resilient material (160) is a generally flat part having a selected two-dimensional shape.

18. Method according to claim 17, **characterised in that** the resilient material (160) comprises an adhesive surface arranged to adhere to the said circuit board (120).

19. Method according to any one of claims 14-18, **characterised in that** the enclosure (110) is made from rigid plastic material, and **in that**, in step c), the sealing is performed using welding.

20. Method for installing a transponder (100) according to any of claims 1-12, **characterised in that** method comprises the following ordered steps:
a) providing said transponder (100) as a transponder comprising a rigid enclosure (110) and a circuit board (120), which circuit board (120) comprises an antenna (121) for emitting a wireless information signal, which enclosure (110) is arranged to completely enclose the circuit board (120) and a hollow compartment (117) arranged to be completely filled with a liquid potting material through at least one injection hole (111) in the enclosure (110), or a compartment (117) which is completely filled by a hardened potting material, said transponder (100) further comprising a piece of resilient material (160), which the enclosure (110) is arranged to completely enclose and which is arranged between an inside surface (113) of the enclosure (110) and a first surface (122) of said circuit board (120), preventing liquid potting material to enter a volume between the enclosure (110) and the circuit board (120) occupied by said resilient material (160);
b) inserting a programming interface tool into an opening (115) in the back side of the enclosure (110), so that the programming interface tool comes into contact with a programming interface contact (124) on a circuit board (120) of the transponder (100);
c) programming the transponder (100) using said programming interface tool;
d) removing the programming interface tool from the said opening (115);
e) permanently sealing the said opening (115);
f) mounting the transponder (100), with the back side facing a mounting surface, in a mounted state in an operating orientation.
